# EUROPEAN PATENT SPECIFICATION

(11) **EP 3 670 945 B1**
(45) Date of publication and mention of the grant of the patent: **15.12.2021**
(21) Application number: 18213991.5
(22) Date of filing: 19.12.2018
(51) Int. Cl.: F16C 32/04, H02N 15/00, B60K 35/00, B60K 37/04, B60R 11/02, B60R 11/00

(54) **MAGNETIC FLOATING DEVICE AND A VEHICLE**
MAGNETISCHE SCHWEBEVORRICHTUNG UND FAHRZEUG
DISPOSITIF FLOTTANT MAGNÉTIQUE ET VÉHICULE

(43) Date of publication of application: 24.06.2020
(73) Proprietor: AUDI AG, 85045 Ingolstadt (DE); LG Electronics Inc., Youngdungpo-gu Seoul 150-721 (KR)
(72) Inventor: SONG, Jieun, Songpa-gu Seoul (KR); CHUN, Sewon, Seocho-gu Seoul (KR); KIM, Soyoung, Gangseo-gu Seoul (KR); MERTENS, Joris, 85051 Ingolstadt (DE); RITTGER, Dr. Lena, 85051 Ingolstadt (DE)
(74) Representative: Hofstetter, Schurack & Partner

(56) References cited:
- WO-A1-2017/034205
- CN-U- 202 268 750
- DE-A1-102014 200 035
- DE-U1-212014 000 011

## Description

The invention is concerned with a magnetic floating device and a vehicle comprising an electronic control unit and the magnetic floating device.

In the field of consumer electronics, magnetic floating devices such as magnetic floating loudspeakers are known. Such a magnetic floating device usually comprises of a floating unit and a base unit, wherein the floating unit is designed to float by means of an adjustment in magnetism of at least one of a plurality of magnets which are comprised by the magnetic floating device. Such a magnetic floating devices is used due to its ergonomic benefits. Furthermore, the presence of integrated cables, which are difficult to clean and can be easily pulled accidentally, can be avoided in the case of the magnetic floating device. However, such a magnetic floating device can be used in a stationary frame of reference such as an office table or a table in home. However, the use of such a magnetic floating device is not possible in the case of a vehicle, because due to dynamic movements of the vehicle, a safe positioning of the floating component of the magnetic floating device is difficult. Such a dynamic movement can be, for example, in a case of a jerk event due to a braking of the vehicle or a usage of vehicle brakes, in which case a magnetic force enabling the floating of the floating unit at a given position can be overcome. Hence, the floating unit can be let off or can fly as a projectile in the interior of the vehicle, such that the flying floating unit can hit a part of the vehicle such as a window glass or a wind panel. This can lead to a damage of the vehicle part.

Document KR 101829376 B1 discloses a sound output apparatus capable of adjusting the height of a floating speaker. The sound output apparatus comprises an elevating member having a magnetic force generation part generating a magnetic field for floating a flying body in the air, a transmission member which rotates along the circumference of the elevating member and moves the elevating member in a vertical direction, and a supporting member ratably supporting the transmission member. However, an integration of the such a sound output apparatus with a floating speaker in a vehicle is not disclosed.

Document DE 21 2014 000 011 U1 discloses a magnetic levitation audio device comprising a magnetic levitation base capable of generating a magnetic field and a sound box levitated above the magnetic levitation base to a magnetic force. The magnetic levitation base comprises a base enclosure, an elector magnetic induction module disposed in the base enclosure. The sound box can be controlled to switch on without the need of manual operations, in order to improve the practicability of the magnetic levitation audio device. However, an integration of the magnetic levitation audio device in a vehicle is not disclosed.

Document US 2016/0157002 A1 discloses a magnetic floating speaker including a seat having a shell and a magnetic floating controller and a lower magnet both received in the shell. A floating member floating and located above the seat has a cover, a bass unit, two full range units and an upper magnet all received in the cover. The magnetism of the upper magnet and the lower magnet is mutually exclusive. However, an integration of the magnetic floating speaker in a vehicle is not disclosed.

Another prior art magnetic floating device is known from CN 202 268 750 U.

It is an object of the present invention to provide a magnetic floating device in a vehicle.

The object is accomplished by the subject matter of the independent claim.

Advantageous developments with further embodiments of the invention are specified in the following description, the dependent claims and the figures.

The invention provides a magnetic floating device that has two parts, a base unit and a floating unit. The magnetic floating device comprises the base unit with a shell, a magnetic floating controller and at least one base magnet, wherein both the magnetic floating controller and the at least one base magnet are integrated in the shell. The base unit of the magnetic floating device functions as a stationary part of the magnetic floating device, so that the base unit may be supported on a surface, for example, a surface of a table or a dashboard of a vehicle. Furthermore the at least one base magnet may be an induction magnet such that the strength and/or the polarity of the at least one base magnet is controlled or adjusted by means of the magnetic floating controller. Furthermore, the magnetic floating device comprises the floating unit with a covering component, a functional component and at least one floating magnet, wherein the functional component and the at least one floating magnet may be integrated in the covering component or may be supported by the covering component. The magnetic floating controller is designed to adjust the floating unit between a floating state and a grounded state by means of an adjustment in magnetism of the at least one base magnet. The magnetism of the at least one base magnet and the at least one floating magnet is mutually exclusive, that is the magnetism of the at least one floating magnet is not influenced by the adjustment in the magnetism of the base magnet. In the floating state, the floating unit is floating above the base unit and in the grounded state, the floating unit is docked in the shell of the base unit.

According to the invention, the magnetic floating device comprises a signal input unit which is designed to receive an announcement signal that signals an anticipation of a jerk event. The signal input unit may be received in the shell of the base unit or in the covering component of the floating unit. Furthermore, the magnetic floating controller is designed to adjust the floating unit from the floating state to the grounded state in order to temporarily dock and/or lock the floating unit in the shell of the base unit by adjusting the magnetism of the at least one base magnet as a function of the announcement signal received by the signal input unit. In other words, when a jerk event is anticipated, the signal input unit receives the announcement signal and transfers or forwards the announcement signal to the magnetic floating controller. This in turn enables the magnetic floating controller to adjust the floating unit from the floating state to the grounded state. This is realized by means of the magnetic floating controller which adjusts the magnetism of the at least one base magnet of the base unit as per the announcement signal. Hence, during the jerk event, the floating unit is secured, as it is docked into the shell of the base unit. Hence, a flying of the floating unit as a projectile due to the external forces acting upon the jerk event on the floating unit can be avoided. For example, in the floating state, the floating unit is floating above the base unit such that a gap is formed between the floating unit and the base unit. This can be ensured in such a manner, that the at least one floating magnet in the floating unit having a given polarity and the at least one base magnet of the base unit, which faces the floating unit, has a similar polarity. This can be ensured by means of the magnetic floating controller which in turn can adjust the strength of the magnetic field as well as the polarity of the at least one base magnet of the base unit. In this case, the magnetic floating controller may ensure a similar polarity of the at least one base magnet as the polarity of the at least one floating magnet facing the at least one base magnet and the strength of the at least one base magnet can be adjusted by means of the magnetic floating controller, in such a manner that the floating unit can be located at a predefined distance or gap above the base unit. the magnetic force can be balanced by the weight of the floating unit and hence the floating state of the floating unit can be achieved. This ensures that the floating unit is floating or levitating stably above the base unit in a stable manner. When the jerk event is anticipated, the signal input unit may receive the announcement signal that signals the anticipation of the jerk event. Upon the receiving of the announcement signal by the signal input unit, the signal input unit transfers or forwards the announcement signal to the magnetic floating controller. Upon receiving the announcement signal, the magnetic floating controller can adjust the magnetism of the at least one base magnet such that the strength of the base magnet is reduced and/or the polarity of the at least one base magnet is reversed as compared to that of the at least one floating magnet facing the at least one base magnet. This in turn ensures that the floating unit is drawn towards the base unit. In other words, the floating unit is adjusted to the grounded state. Hence, the magnetic floating controller ensures a temporary docking and/or locking of the floating unit in the shell of the base unit by adjusting the magnetism of the at least one base magnet as a function of the announcement signal received by the signal input unit. This is of advantage, because this ensures that before the jerk event occurs or during a jerk event the floating unit is stably secured inside the shell of the base unit, hence, an unwanted projectile-like movement or flying of the floating unit due to the forces acting on the floating unit upon the jerk event are avoided.

The invention also comprises embodiments that provide features which afford additional technical advantages.

In one embodiment, the signal input unit may be designed to receive a takeoff signal that signals an end of the jerk event, wherein the magnetic floating controller is designed to adjust the floating unit from the grounded state to the floating state by adjusting the magnetism of the at least one base magnet as a function of the takeoff signal received by the signal input unit. In other words, a sensing unit or a control circuitry can detect the end of the jerk event by monitoring a particular physical property, for example, a vibration of the surface of the table, on which the base unit may be placed. Such that, if at a point of time, the vibration of the surface of the table is lower than a threshold value, then an end of the jerk event is identified by the sensing unit or the control circuitry. At this point of time, the takeoff signal can be sent to the signal input unit by the sensing unit or the control circuitry. The signal input unit can transfer or forward the received takeoff signal to the magnetic control unit, which in turn then can adjust the magnetism of the at least base magnet as a function of the takeoff signal, in order to adjust the floating unit to the floating state. This is of advantage, because this ensures the adjustment of the floating unit from the grounded state to the floating state by means of the magnetic floating controller upon the end of the jerk event. Hence, the magnetic floating controller can be used as ergonomically desired, such that the floating unit is in the floating state above the base unit.

In one embodiment, the magnetic floating controller may be designed to trigger a predefined rotary motion of the floating unit in the shell of the base unit by adjusting the magnetism of the at least one base magnet in order to lock the floating unit, wherein the covering component and the shell constitute a bayonet mount. In other words, upon the anticipation of the jerk event, the signal input unit may receive the announcement signal which enables the magnetic control unit to adjust the magnetism of the at least one base magnet of the base unit, such that the floating unit is adjusted to the grounded state. This may be realized, for example, by means of the magnetic floating controller, which may reduce the strength of the at least one base magnet and/or reverse the polarity of the at least one base magnet, such that the floating unit can be attracted towards the base unit or inside the shell of the base unit. Hence, a docking of the floating unit can be realized. Once a part of the floating unit enters in the shell of the base unit, the magnetic floating controller can adjust the magnetism of the at least one base magnet or a plurality of base magnets which may be located in the base unit such that a torque is acted upon the floating unit for a predefined interval of time which in turn leads to the predefined rotary motion of the floating unit in the shell of the base unit. Furthermore, the covering component of the floating unit may comprise a plurality of protruding structures. For example, the covering component may comprise two protruding structures, whereas the shell may comprise two fissures on the outer surface of the shell such that the covering component and the shell constitute the bayonet mount or a form of the bayonet mount. Upon an initiation of the predefined rotary motion, the protruding structures of the covering component may enter into the respective fissures of the shell during the predefined rotary motion. Hence, this can lead to a locking of the floating unit similar to that in case of a bayonet mount. This is of advantage, because this ensures a stable mechanism for the locking of the floating unit in the shell of the base unit. Moreover, such a bayonet mount is of an economic advantage due to its simplicity to manufacture. Furthermore, upon the end of the jerk event, the signal input unit may receive the takeoff signal upon which the magnetic control unit can trigger the predefined rotary motion in an opposite direction such that the protruding structures of the covering component which were located in the respective fissures of the shell may be moved out. Hence, the floating unit may be unlocked. Upon which the magnetic floating controller may adjust the magnetism of the at least one base magnet of the base unit in such a manner, that the floating unit is adjusted back to the floating state. It is further thinkable, that the magnetic floating controller can trigger a rotatory motion of the floating unit, when the floating unit is in the floating state. Such that, a rotational speed of the rotary motion of the floating unit can be adjusted by magnetic floating controller by adjusting the magnetism of the at least one base magnet or the plurality of magnets. This is of advantage, in case the functional component comprises a loudspeaker, in which case, the distribution of sound energy can be uniformly distributed in about 360° about an axis of rotation of the floating unit, that is, throughout the surroundings of the magnetic floating device. This can lead to a pleasant audibility in all directions and an enhanced 3D-Stero-surround-effect.

In one embodiment, the magnetic floating controller may be designed to trigger a predefined translatory motion of the floating unit in the shell of the base unit by adjusting the magnetism of the at least one base magnet in order to lock the floating unit, wherein the floating unit and the base unit constitute a functionality of a spring-loaded pin. In other words, upon an anticipation of a jerk event, the floating unit may be docked into the shell of the base unit by means an adjustment in the magnetism of the base magnet controlled by the magnetic floating controller. The magnetic floating controller may then trigger the predefined translatory motion of the floating unit in the shell of the base unit, such that the floating unit may be locked in the shell of the base unit. For example, the base unit may comprise an internal spring and an internal spring covering component similar to a spring-loaded pin. Upon the triggering of the predefined translatory motion, the floating unit may press the internal spring covering component which in turn may press the internal spring and a locking of the floating unit may by activated in a similar manner as in the case of the spring-loaded pin. The designing of such a spring-loaded pin may be known to an ordinary person in relevant field. This is of advantage, because this can ensure a realization of a constructing or designing a locking mechanism of the floating unit in a simple and economically beneficial manner.

In one embodiment, in the grounded state, the base unit is designed to electrically charge an energy storage of the floating unit by induction and/or conduction. In other words, the base unit may comprise a charging unit which is designed for a connection with an external electrical charging device such that, the base unit is provided with electrical energy which may be required for the adjustment of the magnetism of the base magnet of the base unit by the magnetic floating controller. In the grounded state, when the floating unit is docked in the shell of the base unit, then the base unit is designed to electrically charge the energy storage of the floating unit. The energy storage of the floating unit comprise a rechargeable battery which may be charged by connection and/or induction by the base unit. This is of advantage, because this can ensure the floating unit to be electrically charged during the floating state which can enable the working of the functional component of the floating unit in the grounded state as well as in the floating state. Furthermore, it is thinkable, that the base unit may comprise a wireless charging transmitter and the floating unit may comprise a wireless charging receiver. Such that, when the charging unit of the base unit is connected to the external electrical charging device, then the wireless charging transmitter can be switched on. When the floating unit is the floating state, that is a gap exists between the floating unit and the base unit, then wireless charging transmitter can transmit electrical energy to the wireless charging receiver by means of a produced magnetic field. This in turn can lead to a storage of electrical energy in the energy storage of the floating unit. Hence, the base unit can continue to supply electrical energy to the floating unit, even when the floating unit is in the floating state.

In one embodiment, the functional component may comprise a display panel. This is of advantage, because the display panel be in form of a light emitting source or a part of the infotainment system.

In one embodiment, the functional component may comprise a loud speaker. This is of advantage, because this may ensure the distribution of sound or sound energy across the magnetic floating unit in a uniform manner. Furthermore, the functional component may comprise a microphone, which may ensure the usage of the functional component as a telephone.

The invention further includes a vehicle comprising an electronic control unit and the inventive magnetic floating device, wherein the electronic control unit is designed to anticipate the jerk event and provide the announcement signal upon an anticipation of the jerk event to the signal input unit. This is of advantage, because this ensures an incorporation or integration of the magnetic floating device in the vehicle, for example, the magnetic floating device may be integrated in a dashboard of the vehicle. The electronic control unit enables the anticipation of the jerk event and provides the announcement signal to the signal input unit of the magnetic floating device. This in turn can transmit the announcement signal to the magnetic floating controller, which can then adjust the magnetism of the at least one base magnet in order to adjust the floating unit to the grounded state. Furthermore, the electronic control unit is designed to provide the takeoff signal signaling the end of the jerk event to the signal input unit. This in turn can transmit the takeoff signal to the magnetic floating controller, which can then adjust the magnetism of the at least one base magnet in order to adjust the floating unit to the floating state.

In one embodiment, the electronic control unit may be designed to anticipate the jerk event on the basis of a digital map and/or a sensor which may be designed to monitor the vehicle environment. In other words, the electronic control unit may anticipate the jerk event on the basis of the digital map, for example, the digital map may comprise of information of the path of travel of the vehicle which may be obtained by a navigation system, such that different road hindrances or speed bumps or sharp corners on the path of the travel may be available to the electronic control unit through the digital map. This can enable the anticipation of the jerk event, for example, the jerk event may result due to the application of brakes in order to deaccelerate the vehicle in front of a road bump or while turning the vehicle at sharp corners of a road during the travel. Such a jerk event can be predetermined and the respective announcement signal can be send to the signal input unit of the magnetic floating device. Furthermore, the sensor, such as at least one camera and/or at least one light detection and ranging sensor (LIDAR) can monitor the vehicle environment so that a presence of different road hindrances or speed bumps or sharp corners on the path of the travel can be detected and the corresponding jerk event can be anticipated. As a result, the announcement signal may be sent to the signal input unit of the magnetic floating device. The signal input unit may transfer or forward the announcement signal to the magnetic floating controller, which may enable the adjustment of the floating unit to the grounded state. Hence, a security or safety of the magnetic floating device as well as the different parts in the interior of the vehicle and the passengers inside of the vehicle can be ensured.

In one embodiment, the announcement signal may be provided by a user in the vehicle by means of a voice signal and/or a gesture. This is of advantage, because this enables the user to control and/or ensure the usage of the magnetic floating device as per his/her choice during the driving or travel by means of the vehicle.

The inventive vehicle is preferably designed as motor vehicle, in particular as a passenger vehicle or a truck, or as a bus.

In the following an exemplary implementation of the invention is described.

The figures show:
- Fig. 1: a schematic illustration of an embodiment of a magnetic floating device in a floating state;
- Fig. 2: a schematic illustration of the magnetic floating device in a grounded state;
- Fig. 3: a schematic illustration of an embodiment of the magnetic floating device; and
- Fig. 4: a schematic illustration of an embodiment of a bayonet mount.

In the figures identical reference signs indicate elements that provide the same function.

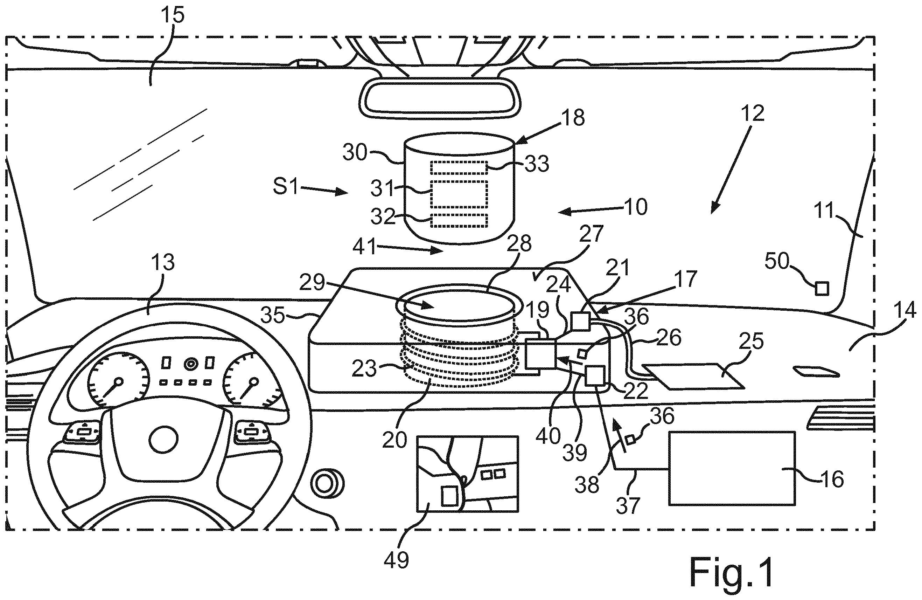

Fig. 1 shows a schematic illustration of an embodiment of a magnetic floating device 10 which can be integrated in a vehicle 11, wherein the vehicle 11 may be a personal vehicle which may be either driven manually or maybe a self-driving vehicle. Furthermore the vehicle 11 may be a semi-autonomous vehicle. In the Fig. 1, a part of an interior room 12 of the vehicle 11 is depicted from a perspective view of a user, who can be the driver (not shown in the figures) of the vehicle 11. Furthermore, a steering wheel 13, which can be used to manoeuver the vehicle 11 by the user, and a dashboard 14 of the vehicle 11 are depicted. The vehicle 11 may comprise a wind screen 15 and an electronic control unit 16.

The magnetic floating device 10 may comprise a base unit 17 and a floating unit 18. The floating unit 18 may float above the base unit 17 and may be adjusted, such that the floating unit 18 is secured and may not fly off as a projectile or fall off during the travel of the vehicle 11. The base unit 17 may be placed or integrated on a surface, such as the dashboard 14 of the vehicle 11. The base unit 17 comprises a shell 35, a magnetic floating controller 19 and a base magnet 20. The magnetic floating controller 19 and the base magnet 20 may be received in the shell 35 of the base unit 17. Furthermore, the base unit 17 may comprise a charging unit 21 and a signal input unit 22. The base magnet 20 may be an induction magnet, wherein the strength and polarity of the base magnet 20 may be controlled by means of the magnetic floating controller 19. For example, the magnetic floating controller 19 may control the strength and/or polarity of the base magnet 20 by controlling the direction of electricity or current through an induction coil 23, which is looping around the base magnet 20. The magnetic floating controller 19 may receive the electrical energy directly from an external electrical charging device 25 or from the charging unit 21, for example, by means of a wire 24. The charging unit 21 may be electrically charged by means of the external electrical charging device 25 through a wire 26. Furthermore, the base unit 17 includes a top shell 27 and a bottom shell (not shown in the figures), wherein the bottom shell may be connected of integrated to the dashboard 14 of the vehicle 11. The top shell 27 comprises a hole 28 which can enclose a volume 29.

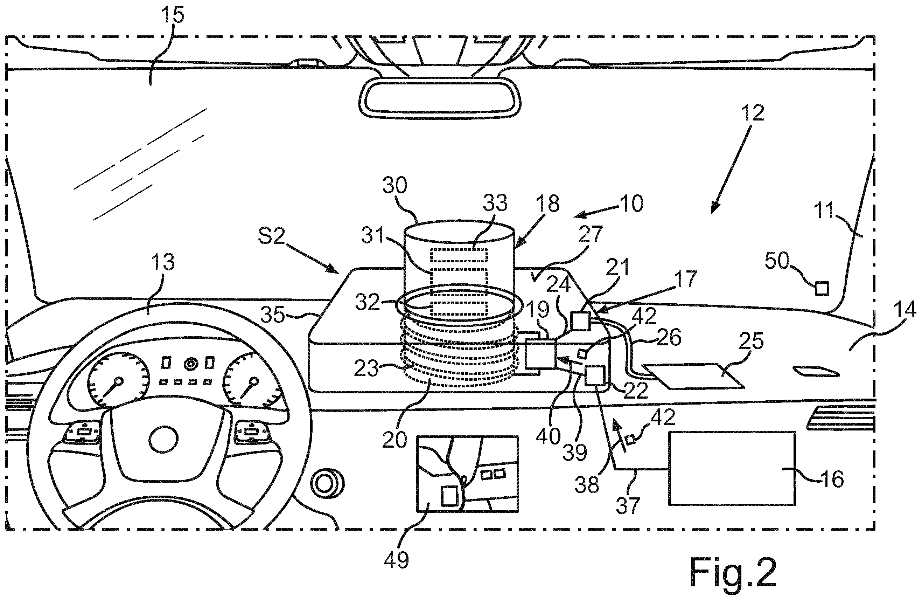

The floating unit 18 may comprise a covering component 30, a functional component 31 and a floating magnet 32, wherein the functional component 31 and the floating magnet 32 may be received in the covering component 30. Furthermore, the floating unit 18 may comprise an energy storage 33 which may be received in the covering component 30. The magnetic floating controller 19 is designed to adjust the floating unit 18 between a floating state S1 and a grounded state S2 by means of an adjustment in magnetism of the base magnet 20. In the floating state S1, the floating unit 18 is floating above the base unit 17, as shown in Fig. 1. In the grounded state S2, the floating unit 18 is docked in the shell 35 of the base unit 17, as shown in Fig. 2. Furthermore, the signal input unit 22 of the magnetic floating device 10 is designed to receive an announcement signal 36 that signals an anticipation of a jerk event. The jerk event may be due a deceleration of the vehicle 11 due to an application of brakes of the vehicle 11, when the vehicle 11 nears a road bump or due to turning of the vehicle 11 at corners of the path of the travel.

The electronic control unit 16 may be designed to anticipate the jerk event and provide the announcement signal 36 upon an anticipation of the jerk event to the signal input unit 22 along a path 37, as shown by an arrow 38. Upon receiving the announcement signal 36, the signal input unit 22 can transmit or forward the announcement signal 36 to the magnetic floating controller 19 along a path 39, as shown by an arrow 40. Upon receiving the announcement signal 36, the magnetic floating controller 19 may adjust the direction of electricity or current through the induction coil 23 of the base magnet 20, such that the strength and/or the polarity of the base magnet 20 can be adjusted, such that the floating unit 18 is adjusted from the floating state S1, in which the floating unit is floating above the base unit 17 with a gap 41 in between, to the grounded state S2, in which a part of the floating unit 18 is docked in the shell 35 of the base unit 17.

The signal input unit 22 may be designed to receive a takeoff signal 42 that signals an end of the jerk event. The electronic control unit 16 may be designed identify the end of the jerk event and send the takeoff signal 42 to the signal input unit 22 along the path 37, as shown by the arrow 38. The electronic control unit 16 may be designed to anticipate the jerk event on the basis of a digital map 49 and/or a sensor 50 which is designed to monitor the vehicle environment. Furthermore, the announcement signal 36 may be provided by the user in the vehicle 11 by means of a voice signal and/or a gesture.

The signal input unit 22 may transmit or forward the takeoff signal 42 to the magnetic floating controller 19 along the path 39, as shown by the arrow 40. The magnetic floating controller 19 is designed to adjust the floating unit 18 from the grounded state S2 to the floating state S1 by adjusting the magnetism of the base magnet 20 as function of the takeoff signal 42 received by the signal input unit 22. In other words, the magnetic floating controller 19 may control the flow of electricity or current to the induction coil 23 looping across the base magnet 20 in such a manner, that the strength and/or polarity of the base magnet 20 are adjusted, in order to repel or move the floating unit 18 back to the floating state S1. Furthermore, the gap 41 may be increased or decreased by adjusting the magnetism of the base magnet 20 by the magnetic floating controller 19.

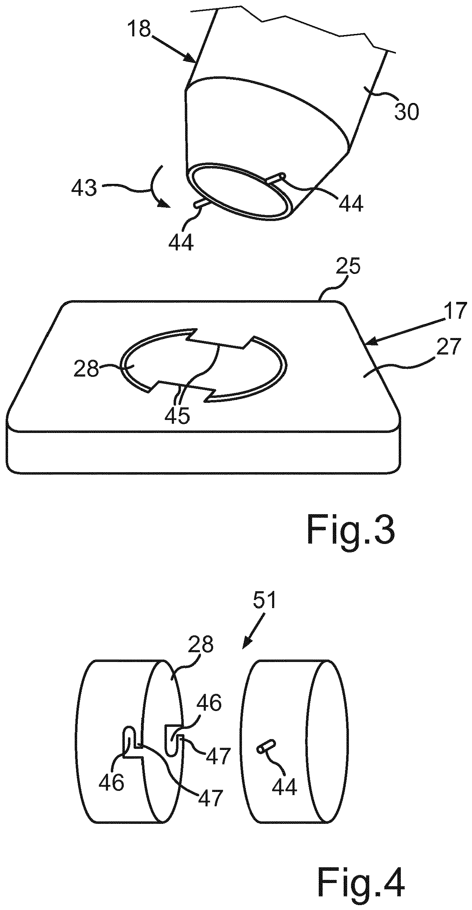

Fig. 3 depicts that the magnetic floating controller 19 is designed to trigger a predefined rotary motion, as shown by an arrow 43, of the floating unit 18, for example, in the shell of the base unit 17 by adjusting the magnetism of the at least one base magnet 17 in order to lock the floating unit 18. The covering component 30 and the shell 35 constitute a bayonet mount 51, as shown in Fig. 4. For example, the covering component 30 may comprise two protrusions 44, whereas the top shell 27 may comprise of two fin-like structures 45 around a perimeter of the hole 28. The fin-like structures 45 may be designed such that they cover or extend through the perimeter of the hole 28. When the floating unit 18 may be docked into the shell 35 of the base unit 17 through the hole 28, the magnetic floating controller may trigger a predefined rotary motion of the floating unit 18, such that the protrusions 44 are rotated and lay beneath the fin-like structures 45. Hence, a locking of the floating unit 18 in the shell 35 of the base unit 17 can be realized. Similarly, the shell 35 of the base unit 17 may comprise of two fissures 46 on the perimeter of the hole 28 on the top shell 27. Such that, once the floating unit 18 is docked into the shell 35 through the hole 28, then the floating unit 18 is rotated by means of the magnetic floating controller 19, such that the protrusions 44 of the floating unit 18 are pushed into the respective fissures 46 and are locked by extensions 47 of the fissures 46. Hence, the locking of the floating unit 18 in the shell 35 of the base unit 17 may be realized. Ultimately, the magnetic floating controller 19 may be designed to trigger a predefined translatory motion of the floating unit 18 in the shell 35 of the base unit 17 by adjusting the magnetism of the base magnet 20 in order to lock the floating unit 18, wherein the floating unit 18 and the base unit 17 may constitute a functionality of a spring-loaded pin (not shown in the figures). Furthermore, in the grounded state S2, the base unit 17 may be designed to electrically charge the energy storage 33 of the floating unit 18 by induction and/or conduction. Furthermore, the functional component 31 may comprise a display panel and/or a loudspeaker.

Overall, the examples show how the magnetic floating device 10 can be integrated in the vehicle 11 in an efficient manner, as it is provided by the invention.

## Claims

1. Magnetic floating device (10) comprising:
- a base unit (17) with a shell (35), a magnetic floating controller (19) and at least one base magnet (20); and
- a floating unit (18) with a covering component (30), a functional component (31) and at least one floating magnet (32), wherein the magnetic floating controller (19) is designed to adjust the floating unit (18) between a floating state (S1) and a grounded state (S2) by means of an adjustment in magnetism of the at least one base magnet (20), wherein in the floating state (S1), the floating unit (18) is floating above the base unit (17) and in the grounded state (S2), the floating unit (18) is docked in the shell (35) of the base unit (17),
**characterized in that**
- the magnetic floating device (10) comprises a signal input unit (22) which is designed to receive an announcement signal (36) that signals an anticipation of a jerk event; and
- the magnetic floating controller (19) is designed to adjust the floating unit (18) from the floating state (S1) to the grounded state (S2) in order to temporarily dock and/or lock the floating unit (18) in the shell (35) of the base unit (17) by adjusting the magnetism of the at least one base magnet (20) as a function of the announcement signal (36) received by the signal input unit (22).

2. Magnetic floating device (10) according to claim 1, wherein the signal input unit (22) is designed to receive a takeoff signal (42) that signals an end of the jerk event, wherein the magnetic floating controller (19) is designed to adjust the floating unit (18) from the grounded state (S2) to the floating state (S1) by adjusting the magnetism of the at least one base magnet (20) as a function of the takeoff signal (42) received by the signal input unit (22).

3. Magnetic floating device (10) according to claim 1 or 2, wherein the magnetic floating controller (19) is designed to trigger a predefined rotary motion of the floating unit (18) in the shell (35) of the base unit (17) by adjusting the magnetism of the at least one base magnet (20) in order to lock the floating unit (18), wherein the covering component (30) and the shell (35) constitute a bayonet mount (51).

4. Magnetic floating device (10) according to any of the preceding claims, wherein the magnetic floating controller (19) is designed to trigger a predefined translatory motion of the floating unit (18) in the shell (35) of the base unit (17) by adjusting the magnetism of the at least one base magnet (20) in order to lock the floating unit (18), wherein the floating unit (18) and the base unit (17) constitute a functionality of a spring-loaded pin.

5. Magnetic floating device (10) according to any of the preceding claims, wherein in the grounded state (S2), the base unit (17) is designed to electrically charge an energy storage (33) of the floating unit (18) by induction and/or conduction.

6. Magnetic floating device (10) according to any of the preceding claims, wherein the functional component (31) comprises a display panel.

7. Magnetic floating device (10) according to any of the preceding claims, wherein the functional component (31) comprises a loud speaker.

8. Vehicle (11) comprising an electronic control unit (16) and a magnetic floating device (10) according to any of the preceding claims, wherein the electronic control unit (16) is designed:
- to anticipate the jerk event and provide the announcement signal (36) upon an anticipation of the jerk event to the signal input unit (22); and
- to provide the takeoff signal (42) signaling the end of the jerk event to the signal input unit (22).

9. Vehicle (11) according to claim 8, wherein the electronic control unit (16) is designed to anticipate the jerk event on the basis of a digital map (49) and/or a sensor (50) which is designed to monitor the vehicle environment.

10. Vehicle (11) according to claim 8 or 9, wherein the announcement signal (36) is provided by a user in the vehicle (11) by means of a voice signal and/or a gesture.

## Patentansprüche

1. Magnetschwebevorrichtung (10), die umfasst:
- eine Basiseinheit (17) mit einer Hülle (35), einer Magnetschwebesteuereinheit (19) und mindestens einem Basismagneten (20); und
- eine Schwebeeinheit (18) mit einer Abdeckkomponente (30), einer Funktionskomponente (31) und mindestens einem Schwebemagneten (32), wobei die Magnetschwebesteuereinheit (19) dazu ausgelegt ist, die Schwebeeinheit (18) zwischen einem Schwebezustand (S1) und einem fixierten Zustand (S2) mittels einer Einstellung des Magnetismus des mindestens einen Basismagneten (20) einzustellen, wobei die Schwebeeinheit (18) im Schwebezustand (S1) über der Basiseinheit (17) schwebt und die Schwebeeinheit (18) im fixierten Zustand (S2) in der Hülle (35) der Basiseinheit (17) verankert ist,
**dadurch gekennzeichnet, dass**
- die Magnetschwebevorrichtung (10) eine Signaleingabeeinheit (22) umfasst, die dazu ausgelegt ist, ein Ankündigungssignal (36) zu empfangen, das ein Vorhersehen eines Ruckereignisses signalisiert; und
- die Magnetschwebesteuereinheit (19) dazu ausgelegt ist, durch Einstellen des Magnetismus des mindestens einen Basismagneten (20) als Funktion des Ankündigungssignals (36), das durch die Signaleingabeeinheit (22) empfangen wird, die Schwebeeinheit (18) vom Schwebezustand (S1) in den fixierten Zustand (S2) einzustellen, um die Schwebeeinheit (18) vorübergehend in der Hülle (35) der Basiseinheit (17) zu verankern und/oder zu verriegeln.

2. Magnetschwebevorrichtung (10) nach Anspruch 1, wobei die Signaleingabeeinheit (22) dazu ausgelegt ist, ein Abhebesignal (42) zu empfangen, das ein Ende des Ruckereignisses signalisiert, wobei die Magnetschwebesteuereinheit (19) dazu ausgelegt ist, durch Einstellen des Magnetismus des mindestens einen Basismagneten (20) als Funktion des Abhebesignals (42), das durch die Signaleingabeeinheit (22) empfangen wird, die Schwebeeinheit (18) vom fixierten Zustand (S2) in den Schwebezustand (S1) einzustellen.

3. Magnetschwebevorrichtung (10) nach Anspruch 1 oder 2, wobei die Magnetschwebesteuereinheit (19) dazu ausgelegt ist, durch Einstellen des Magnetismus des mindestens einen Basismagneten (20) eine vordefinierte Drehbewegung der Schwebeeinheit (18) in der Hülle (35) der Basiseinheit (17) auszulösen, um die Schwebeeinheit (18) zu verriegeln, wobei die Abdeckkomponente (30) und die Hülle (35) eine Bajonettfassung (51) bilden.

4. Magnetschwebevorrichtung (10) nach einem der vorangehenden Ansprüche, wobei die Magnetschwebesteuereinheit (19) dazu ausgelegt ist, durch Einstellen des Magnetismus des mindestens einen Basismagneten (20) eine vordefinierte Translationsbewegung der Schwebeeinheit (18) in der Hülle (35) der Basiseinheit (17) auszulösen, um die Schwebeeinheit (18) zu verriegeln, wobei die Schwebeeinheit (18) und die Basiseinheit (17) eine Funktionalität eines federbelasteten Stifts bilden.

5. Magnetschwebevorrichtung (10) nach einem der vorangehenden Ansprüche, wobei die Basiseinheit (17) im fixierten Zustand (S2) dazu ausgelegt ist, einen Energiespeicher (33) der Schwebeeinheit (18) durch Induktion und/oder Leitung elektrisch aufzuladen.

6. Magnetschwebevorrichtung (10) nach einem der vorangehenden Ansprüche, wobei die Funktionskomponente (31) ein Anzeigefeld umfasst.

7. Magnetschwebevorrichtung (10) nach einem der vorangehenden Ansprüche, wobei die Funktionskomponente (31) einen Lautsprecher umfasst.

8. Fahrzeug (11) mit einem elektronischen Steuergerät (16) und einer Magnetschwebevorrichtung (10) nach einem der vorangehenden Ansprüche, wobei das elektronische Steuergerät (16) dazu ausgelegt ist:
- das Ruckereignis vorherzusehen und ein Ankündigungssignal (36) bei einem Vorhersehen des Ruckereignisses zur Signaleingabeeinheit (22) zu liefern; und
- das Abhebesignal (42), das das Ende des Ruckereignisses signalisiert, zur Signaleingabeeinheit (22) zu liefern.

9. Fahrzeug (11) nach Anspruch 8, wobei das elektronische Steuergerät (16) dazu ausgelegt ist, das Ruckereignis auf der Basis einer digitalen Karte (49) und/oder eines Sensors (50), der dazu ausgelegt ist, die Fahrzeugumgebung zu überwachen, vorherzusehen.

10. Fahrzeug (11) nach Anspruch 8 oder 9, wobei das Ankündigungssignal (36) durch einen Benutzer im Fahrzeug (11) mittels eines Sprachsignals und/oder einer Geste bereitgestellt wird.

## Revendications

1. Dispositif flottant magnétique (10) comportant :
- une unité de base (17) avec une enveloppe (35), un contrôleur flottant magnétique (19) et au moins un aimant de base (20) ; et
- une unité flottante (18) avec un composant couvrant (30), un composant fonctionnel (31) et au moins un aimant flottant (32), dans lequel le contrôleur flottant magnétique (19) est conçu pour ajuster l'unité flottante (18) entre un état flottant (S1) et un état mis à la terre (S2) par l'intermédiaire d'un ajustement en magnétisme de l'au moins un aimant de base (20), dans lequel, dans l'état flottant (S1), l'unité flottante (18) flotte au-dessus de l'unité de base (17), et dans l'état mis à la terre (S2), l'unité flottante (18) est amarrée dans l'enveloppe (35) de l'unité de base (17),
**caractérisé en ce que**
- le dispositif flottant magnétique (10) comporte une unité d'entrée de signal (22) qui est conçue pour recevoir un signal d'annonce (36) signalant une anticipation d'un événement de secousse ; et
- le contrôleur flottant magnétique (19) est conçu pour ajuster l'unité flottante (18) de l'état flottant (S1) à l'état mis à la terre (S2) pour amarrer et / ou verrouiller temporairement l'unité flottante (18) dans l'enveloppe (35) de l'unité de base (17) en ajustant le magnétisme de l'au moins un aimant de base (20) en fonction du signal d'annonce (36) reçu par l'unité d'entrée de signal (22).

2. Dispositif flottant magnétique (10) selon la revendication 1, dans lequel l'unité d'entrée de signal (22) est conçue pour recevoir un signal de départ (42) signalant la fin de l'événement de secousse, dans lequel le contrôleur flottant magnétique (19) est conçu pour ajuster l'unité flottante (18) de l'état mis à la terre (S2) à l'état flottant (S1) en ajustant le magnétisme de l'au moins un aimant de base (20) en fonction du signal de départ (42) reçu par l'unité d'entrée de signal (22).

3. Dispositif flottant magnétique (10) selon la revendication 1 ou 2, dans lequel le contrôleur flottant magnétique (19) est conçu pour déclencher un mouvement rotatif prédéfini de l'unité flottante (18) dans l'enveloppe (35) de l'unité de base (17) en ajustant le magnétisme de l'au moins un aimant de base (20) pour verrouiller l'unité flottante (18), dans lequel le composant couvrant (30) et l'enveloppe (35) constituent une fixation par baïonnette (51).

4. Dispositif flottant magnétique (10) selon l'une quelconque des revendications précédentes, dans lequel le contrôleur flottant magnétique (19) est conçu pour déclencher un mouvement de translation prédéfini de l'unité flottante (18) dans l'enveloppe (35) de l'unité de base (17) en ajustant le magnétisme de l'au moins un aimant de base (20) pour verrouiller l'unité flottante (18), dans lequel l'unité flottante (18) et l'unité de base (17) constituent une fonctionnalité d'une broche à ressort.

5. Dispositif flottant magnétique (10) selon l'une quelconque des revendications précédentes, dans lequel, dans l'état mis à la terre (S2), l'unité de base (17) est conçue pour charger électriquement un dispositif de stockage d'énergie (33) de l'unité flottante (18) par induction et / ou conduction.

6. Dispositif flottant magnétique (10) selon l'une quelconque des revendications précédentes, dans lequel le composant fonctionnel (31) comporte un panneau d'affichage.

7. Dispositif flottant magnétique (10) selon l'une quelconque des revendications précédentes, dans lequel le composant fonctionnel (31) comporte un haut-parleur.

8. Véhicule (11) comportant une unité de commande électronique (16) et un dispositif flottant magnétique (10) selon l'une quelconque des revendications précédentes, dans lequel l'unité de commande électronique (16) est conçue :
- pour anticiper l'événement de secousse et fournir le signal d'annonce (36) sur anticipation de l'événement de secousse à l'unité d'entrée de signal (22) ; et
- pour fournir le signal de départ (42) signalant la fin de l'événement de secousse à l'unité d'entrée de signal (22).

9. Véhicule (11) selon la revendication 8, dans lequel l'unité de commande électronique (16) est conçue pour anticiper l'événement de secousse sur la base d'une carte numérique (49) et / ou d'un capteur (50) qui est conçu pour surveiller l'environnement du véhicule.

10. Véhicule (11) selon la revendication 8 ou 9, dans lequel le signal d'annonce (36) est fourni par un utilisateur dans le véhicule (11) par l'intermédiaire d'un signal vocal et / ou d'un geste.
